# EUROPEAN PATENT APPLICATION

(11) **EP 2 298 942 A1**
(43) Date of publication of application: **23.03.2011**
(21) Application number: 10174808.5
(22) Date of filing: 01.09.2010
(51) Int. Cl.: C22B 3/00, C22B 3/22, C22B 7/00, C22B 15/00, C22B 58/00, B01D 61/38, C01B 19/00

(54) **Method for recovery of copper, indium, gallium, and selenium**

(30) Priority: 18.09.2009 TW 98131607; 18.05.2010 TW 99115848
(71) Applicant: Solar Applied Materials Technology Corp., Annan Dist , Tainan (TW)
(72) Inventor: Lian, Jian-Jou, Tainan City (TW); Huang, I-Wen, Tainan City (TW); Lee, Chung-Ching, Tainan City (TW); Chen, Hai-Jui, Tainan City (TW)
(74) Representative: Becker Kurig Straus

(57) **Abstract**

A method for the recovery of copper, indium, gallium, and selenium is provided. The method includes steps of using a mixed solution containing a hydrochloric acid and hydrogen peroxide to dissolve the copper, indium, gallium, and selenium. After using the hydrazine to separate the selenium out, the copper is reduced by indium metal. Later, a combination of a supported liquid membrane (SLM) and a strip dispersion solution separates the gallium from the indium. The acid performed in all the steps of the method is hydrochloric acid. Therefore, the copper, indium, gallium, and selenium can be separated one by one in a single production line without changing the solution during the operation process, thereby simplifying the process, shortening the operation time and lowering the manufacture cost.

## Description

### BACKGROUND

### Field of Invention

The present invention relates to a method for recovery of copper, indium, gallium, and selenium, and more particularly, to a method employing supported liquid membrane (SLM) module for recovery of copper, indium, gallium, and selenium.

### Description of Related Art

Copper indium gallium diselenide (CIGS) thin film solar cells are recognized as possessing high development potential due to their high photoelectric conversion efficiency. CIGS thin film solar cells may be manufactured by vacuum sputtering, evaporation, or non-vacuum coating process. In order to reduce the cost and meet the environmental requirements, it is desired to recycle the copper, indium, gallium and selenium from the manufacturing process of CIGS thin film solar cells, and regardless of the way they are manufactured. Thus, there is a need in the art for removal and recovery of copper, indium, gallium, and selenium from the waste (water).

A conventional method for recovery of selenium has described that amorphous selenium is obtained by precipitating selenium from a solution of selenious acid in methanol or ethanol with hydrazine at a temperature of about 20 degrees C below zero. Other search has disclosed that a selenium-containing material is reacted with carbon monoxide and ammonia or a primary or secondary amine to form a compound soluble in a solvent. The reaction product is subjected to the reverse reaction by heating it to liberate selenium resulted in recovery of selenium.

A conventional process is directed to recover gallium from gallium arsenide waste by supported liquid membrane. Other search has disclosed an organic phase comprising 7-(4-ethyl-1-methyloctyl)-8-hydroxyquinoline (Kelex10) and an extractant comprising tricaprylmethyl-ammonium chloride (Aliquat 336) to recover gallium with high purity.

However, the process for recovery of the copper, indium, gallium, and selenium respectively requires complicated steps. For example, after the selenium is separated, the reaction solution needs to be changed into another solution suitable for separating gallium therefrom. The process includes complicated steps, takes long time to accomplish the recovery, and costs more. Moreover, the complicated chemical process results in a lot of wastewaters.

Thus, there is a need to provide an extraction process that can enhance the stability and efficiency of the SLM membrane for the removal and recovery of copper, indium, gallium, and selenium from the aqueous feed solutions.

### SUMMARY

Accordingly, an aspect of the present invention provides a method to resolve the above problems of conventional process including complicated steps and requiring longer process time.

In one embodiment, the present invention relates to a method that comprises the following steps. First, a plurality of metal powders containing copper, indium, gallium, and selenium are added into a hydrochloric acid solution. And then, a hydrogen peroxide solution is added into the hydrochloric acid solution for completely dissolving the metal powders and forming a first solution, in which the hydrochloric acid solution and the hydrogen peroxide solution are mixed with a first volume ratio in the first solution. Then, a hydrazine solution is added into the first solution for obtaining the selenium and forming a second solution almost free of selenium. After that, a cementation step is performed to place an indium metal into the second solution for obtaining the copper and forming a third solution almost free of copper. Subsequently, a supported liquid membrane (SLM) module is employed to obtain the gallium, in which the SLM module has a first portion and a second portion, the first portion has a liquid membrane embedded in a microporous support material, and the step of obtaining the gallium is described as follows. A proton concentration of the third solution is initially adjusted to at least 8N by using a concentrated acid. After the third solution containing indium and gallium is fed into the second portion of the SLM module in a first direction, a strip dispersion solution is introduced into the first portion of the SLM module in a second direction opposing to the first direction, so as to diffuse gallium ions of the third solution into the strip dispersion solution in the first portion, in which the strip dispersion solution includes an aqueous strip solution dispersed in an organic solution, and the organic solution comprises an extractant to extract the gallium ions from the third solution. All or a part of the strip dispersion solution is left to stand and self-separated into an organic phase and an aqueous phase, in which the aqueous phase contains the gallium ions, and the third solution remains the gallium ions with less 30 ppm. The third solution is then subjected to an electrolytic process for obtaining the indium, thereby accomplishing the recovery of selenium, copper, gallium and indium.

According to one embodiment of the present invention, the third solution has a proton concentration of 8N to 10N before the third solution is fed into the SLM module.

According to another embodiment of the present invention, the first volume ratio of the hydrochloric acid to the hydrogen peroxide in the first solution is 10:1 to 10:3.

According to another embodiment of the present invention, the hydrazine solution has an equivalent concentration of 1 N to 3N.

According to another embodiment of the present invention, the volume ratio of the organic solution to the aqueous strip solution in the strip dispersion solution is about 2:1.

In comparison with the conventional method of recovery of copper, indium, gallium, and selenium, the present invention is directed to a process operated in a single production line to separate the copper, indium, gallium, and selenium respectively without changing the reaction solution, thereby simplifying the process, shortening the operation time and lowering the manufacture cost.

### BRIEF DESCRIPTION OF THE DRAWINGS

These and other features, aspects, and advantages of the present invention will become better understood with regard to the following description, appended claims, and accompanying drawings where:
Figure 1A is a schematic representation of the combined supported liquid membrane/strip dispersion according to an embodiment of the present invention for the recovery of selenium, copper, gallium and indium;
Figure 1 B is a schematic representation of the combined supported liquid membrane/strip dispersion according to another embodiment of the present invention for the recovery of selenium, copper, gallium and indium; and
Figure 2 is an enlarged view of the schematic representation of the combined supported liquid membrane/strip dispersion of the present invention for the recovery of selenium, copper, gallium and indium.

### DETAILED DESCRIPTION

Reference will now be made in detail to the present preferred embodiments of the invention, examples of which are illustrated in the accompanying drawings. Wherever possible, the same reference numbers are used in the drawings and the description to refer to the same or like parts.

The present invention relates to a method for the recovery of copper, indium, gallium, and selenium. The acid employed in all steps of the method is hydrochloric acid. Therefore, the copper, indium, gallium, and selenium can be separated respectively in a single production without changing the reaction solution during operation.

In one embodiment, the present invention relates to a method for the recovery of copper, indium, gallium, and selenium. First, a plurality of metal powders containing copper, indium, gallium, and selenium are provided. The metal powders are added into a hydrochloric acid solution. And then, hydrogen peroxide is added to the hydrochloric acid solution for completely dissolving the metal powders and forming a first solution, in which the hydrochloric acid solution and the hydrogen peroxide solution are mixed with a first volume ratio in the first solution. Then, a hydrazine solution is added to the first solution for obtaining the selenium and forming a second solution almost free of selenium. After that, a cementation step is performed, in which an indium metal is placed into the second solution for obtaining the copper and forming a third solution almost free of copper.

In one embodiment, a supported liquid membrane (SLM) module is employed to obtain the gallium, in which the SLM module has a first portion and a second portion, the first portion has a liquid membrane embedded in a microporous support material, and the step of obtaining the gallium is described as follows. A proton concentration of the third solution is initially adjusted to at least 8N by using a concentrated acid. After the third solution containing indium and gallium is fed into the second portion of the SLM module in a first direction, a strip dispersion solution is introduced into the first portion of the SLM module in a second direction opposing to the first direction, so as to diffuse gallium ions of the third solution into the strip dispersion solution in the first portion, in which the strip dispersion solution includes an aqueous strip solution dispersed in an organic solution, and the organic solution comprises an extractant to extract the gallium ions from the third solution. All or a part of the strip dispersion is left to stand and self-separated into an organic phase and an aqueous phase, in which the aqueous phase contains the gallium ions, and the third solution remains the gallium ions with less 30 ppm.

The proton concentration in the third solution may be varied with time during the recovery process proceeds.

In some embodiments, the third solution has a proton concentration of 8N to 10N before the third solution is fed into the SLM module.

In some embodiments, the first volume ratio of the hydrochloric acid to the hydrogen peroxide in the first solution is 10:1 to 10:3.

In some embodiments, the hydrazine solution has an equivalent concentration of 1 N to 3N.

In some embodiments, the organic solution has more volume than the aqueous strip solution in the strip dispersion solution. In an example, the volume ratio of the organic solution to the aqueous strip solution in the strip dispersion solution is about 2:1.

It is noted that elemental selenium can be dissolved in hot hydrochloric acid/hydrogen peroxide solution or nitric acid, as shown in following equations 1,2 and 3.

3H₂O₂+Se⇄2H₂O+H₂SeO₄ (1)

6H⁺+6NO₃⁻+Se⇄6NO₂+H₂SeO₄+2H₂O (2)

2H⁺+2Cl⁻+H₂SeO₄⇄ Cl₂+H₂SeO₃+H₂O (3)

Hydrazine ion is used to reduce both Se(IV) and Se(VI) ions directly to elemental selenium. The reduced reaction of the selenic acid is given in equation 4.

2H₂SeO₄+3N₂H₅⁺⇄2Se+3N₂+8H₂O+3H⁺ (4)

Additionally, it is noted that the metal powders containing copper, indium, gallium, and selenium, gallium dissolved in the first solution is an exothermic reaction so that the temperature of the first solution is increased, thereby facilitating selenium to dissolve in the first solution without heating the first solution.

It is noted that in the step of placing the indium metal into the second solution, one metal having relatively low standard electrode potential, such as indium, can deposit and reduce another metal having relatively high standard electrode potential, such as copper. Similarly, the indium metal can reduce other metals having relatively high standard electrode potential, such as tin, lead, nickel, and sliver, too. The indium metal is not limited to the aforementioned forms. In some embodiments, the indium metal can be embodied in a form of metal powder, a metal wire, a metal laminate or a metal plate.

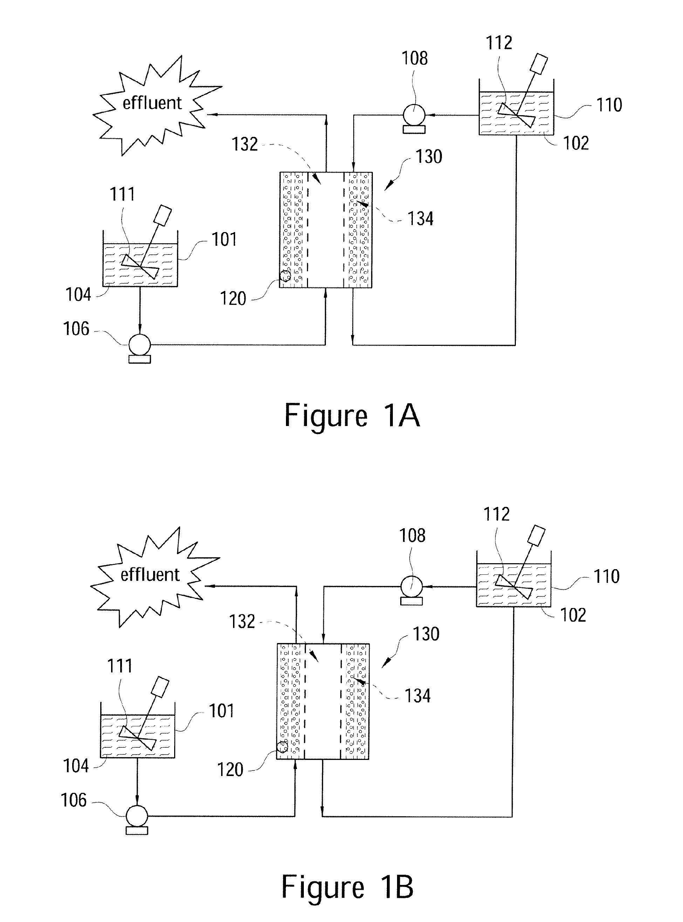

While any SLM configuration may be employed in the method of the invention, an example of one configuration employs a hollow-fiber SLM module as the liquid membrane microporous support. Such hollow-fiber SLM modules consist of microporous hollow fibers arranged in a shell-and-tube configuration. Reference is made to Figures 1A and 1 B, which are schematic representations of the hollow-fiber SLM module of the present invention for the recovery of selenium, copper, gallium and indium. The strip dispersion solution 102 is passed through either the shell side (as shown in Figure 1A) or the tube side (as shown in Figure 1 B) of the hollow-fiber SLM module 130. The third solution, which contains gallium and indium for being extracted, is passed through the opposing side (i.e. either the tube side (as shown in Figure 1A) or the shell side (as shown in Figure 1 B)) of the module and serves as an aqueous feed solution 104. The use of the hollow-fiber SLM module in the combined SLM/strip dispersion process allows constant supply of the strip dispersion solution, ensuring a stable and continuous operation.

In one embodiment, the feed solution 104 is mixed well by a mixer 111 in the feed tank 101, passed through an inlet (unshown) of the tube side 132 of the hollow-fiber SLM module 130 by a feed pump 106, and drained as an effluent from an outlet (unshown) of the tube side 132; the strip dispersion solution 102 is mixed well by a mixer 112 in the strip dispersion tank 110 and passed through the shell side 134 of the hollow-fiber SLM module 130 by a pump 108, as shown in Figure 1A.

In another embodiment, the feed solution 104 and the strip dispersion solution 102 are passed through the hollow-fiber SLM module 130 in parallel but opposite directions, i.e. the strip dispersion solution 102 is passed through the shell side 134 in a direction opposing to the flow direction of the feed solution 104 passing through the tube side 132, so that the feed solution 102 and the strip dispersion solution 104 interfacially contact to each other longer for improving the extraction efficiency.

For the purposes of the invention, a strip dispersion solution is defined as a mixture of an aqueous phase and an organic phase. The aqueous phase of the strip dispersion solution comprises an aqueous strip solution, while the organic phase comprises one or more extractants. The strip dispersion solution is formed by mixing the aqueous and organic phases well, for example, by using a mixer 112 in the strip dispersion tank 110 as shown in Figure 1A or Figure 1B. This combination results in droplets of the aqueous strip solution in a continuous organic phase. The well-dispersed status of the strip dispersion solution is maintained while the strip dispersion solution flow through a membrane module, e.g., a hollow-fiber SLM module. The continuous organic phase of the strip dispersion solution readily wets the hydrophobic pores of the microporous hollow fibers in the hollow-fiber SLM module, for forming a stable liquid membrane.

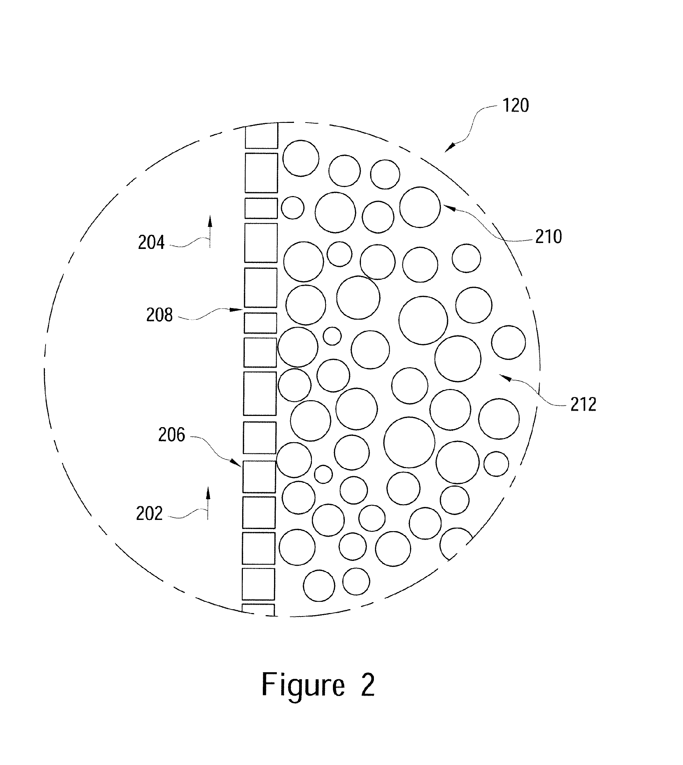

Figure 2 shows an enlarged view of a partial cross-sectional diagram of the zone 120 of Figure 1 with respect to the hollow fiber with the strip dispersion solution of the present invention. During the extraction process, a pressure, Po, is applied on the strip dispersion side of the hollow-fiber SLM module; simultaneously, a pressure, Pa, is also applied on the feed side of the hollow-fiber SLM module, in which Pa is approximately 2 psi and is higher than Po (Po and Pa unshown). The pressure differential between the two sides (for example, Pa is more than Po) prevents the organic solution 212 of the strip dispersion solution from passing through the pores 208 on the hollow-fiber wall 206 to permeate the feed side. The dispersed droplets of the aqueous strip solution in a typical size of about 80 micrometers (mm) to about 800 mm and are orders of magnitude larger than the pore size (approximately 0.03 mm) of the microporous hollow fibers of the hollow-fiber SLM module. Thus, these droplets are retained on the strip dispersion side of the SLM and cannot pass through the pores to go to the feed side.

In this SLM/strip dispersion system, there is a constant supply of the organic membrane solution, i.e., the organic phase of the strip dispersion solution, into the pores. This constant supply of the organic phase ensures a stable and continuous operation of the SLM. In addition, the direct contact between the organic and strip phases provides efficient mass transfer for stripping. The organic and strip phases can be mixed well, for example, by high-shear mixing, to increase the contact area between the two phases.

When removal of gallium is complete, the mixer is stopped mixing the strip dispersion solution, and the dispersion solution is left to stand and self-separated into two phases, i.e. the organic solution and the concentrated strip solution. The concentrated strip solution containing gallium is referred to the product of this process.

A source of the aforementioned metal powders includes but is not limited to waste waters or process streams containing copper, indium, gallium, and selenium. In one embodiment, the metal powders containing the copper, indium, gallium, and selenium may be sourced from a solution obtained by dissolving a Cu/In/Ga/Se spent target in an acid.

An amount of the D2EHPA (di(2-ethyl-hexyl)phosphoric acid) in the organic solution of the present strip dispersion solution for recovery of gallium is about 10% by volume to about 70% by volume. In some embodiments, the amount of the D2EHPA in the organic solution for recovery of gallium is about 30 % by volume to about 70 % by volume. In certain embodiments, the amount of the D2EHPA in the organic solution for recovery of gallium comprises about 30% by volume to about 50% by volume.

The present invention provides several advantages over conventional SLM technology for removal and recovery of gallium from aqueous feed solution. These advantages include increased membrane stability, reduced costs, increased simplicity of operation, improved flux, and improved recovery for gallium.

The hollow-fiber SLM module is more stable than conventional SLMs due to the permeation of constant supply of the organic solution into the pores of the hollow fibers, resulting in stable and continuous operation. Besides, the present configuration also eliminates the need for recharging membrane modules as required by the conventional SLMs. Thus, the present method not only decreases the costs of operation and the hollow-fiber SLM module, but also simplifies the recovery operation.

Moreover, the present invention provides direct contact between the organic/extraction phase and aqueous strip phase. The two-phase mixture provides more mass transfer surface area in addition to the mass transfer surface area given by the hollow fibers, resulting in extremely efficient stripping of the target species from the organic phase. This efficient stripping process enhances the mass transfer flux for the extraction of gallium.

This invention is further illustrated by the following examples, which are not to be construed in any way as imposing limitations upon the scope thereof. To the contrary, it is to be clearly understood that reading the description herein may suggest various other embodiments, modifications, and equivalents to those skilled in the art without departing from the spirit of the present invention and/or the scope of the appended claims.

### Examples

The following example is run in the countercurrent mode (i.e. in parallel but opposing directions) with the feed solution passing through the tube side of the microporous polypropylene hollow-fiber SLM module whereas the strip dispersion solution passing through the shell side of the hollow-fiber SLM module. The extracted gallium in the hollow-fiber SLM module and in the dispersion tank is further stripped into the strip dispersion solution.

### Example 1

### 1. Dissolving the Copper, Indium, Gallium, and Selenium

The metal powders generated from a Cu/In/Ga/Se spent target are firstly added into a hydrochloric acid solution having a concentration of 8N to 10N. And then, a hydrogen peroxide solution is gradually added to the hydrochloric acid solution for completely dissolving the metal powders and forming a first solution, in which the hydrochloric acid solution and the hydrogen peroxide solution are mixed with a first volume ratio of 10:1. A solubility of the metal powders in the first solution equals to 98.5%. The insoluble residue of the metal powder is filtered out from the first solution.

### 2. Reducing Selenium by Hydrazine Solution

A hydrazine solution having an equivalent concentration of 1 N to 3N is gradually added to the first solution. And then, the transparent first solution turns to brick red gradually. After reacting for 21 hours, the elemental selenium is filtrated and obtained from the first solution, and a second solution containing the copper, indium and gallium ions is formed. The resulted selenium is further analyzed by using inductively coupled plasma optical emission spectrometry (ICP-OES). The resulted selenium has high purity (>4N) and an estimated recovery rate of about 99.1%. The selenium concentration in the second solution is less than 1 ppm.

### 3. Reducing Copper by Indium Metal

An indium metal is placed into the second solution. After a reducing reaction for 8 hours, the elemental copper is filtrated and obtained from the second solution and forming a third solution containing the indium and gallium ions. The resulted copper is analyzed by using ICP-OES. The resulted copper has high purity copper (>2N) and an estimated recovery rate of about 99.2%. The copper concentration in the third solution is less than 0.5 ppm.

### 4. Separating Gallium By Using Hollow-Fiber Supported Liquid Membrane Module

A strip dispersion solution includes an aqueous strip solution dispersed in an organic solution, and a volume ratio of the organic solution to the aqueous strip solution is about 2:1. In the organic solution, D2EHPA serves as an extractant, kerosene serves as a dispersant, and an amount of the D2EHPA in the organic solution is 30% by volume to 50% by volume. The aqueous strip solution has an equivalent concentration of 1 N of a hydrochloric acid. The proton concentration of the third solution is adjusted to 8N by using a concentrated acid before feeding into the second portion of the SLM module, in which the third solution is regarded as a feed solution. The process is operated at a temperature of 20°C to 30°C.

At beginning of the process, the feed solution is passed through the tube side of the hollow-fiber SLM module. In an example, after the tube side of the hollow-fiber SLM module is filled with the feed solution, the water-in-oil strip dispersion solution is then pumped into the shell side of the hollow-fiber SLM module. In order to prevent the organic phase of the strip dispersion solution form passing through the pores of the hollow fibers into the feed solution, the pressure in the tube side is maintained at a positive pressure, i.e., 4 - 5 psi higher than that in the shell side unless specified otherwise. Both the feed and dispersion solutions are pumped from the respective tanks to the hollow-fiber SLM module and then recycled back to the respective tanks. The respective samples from the feed (third) and aqueous strip solutions are taken to measure the gallium concentration at certain timed intervals. The process is completed when the gallium concentration in the feed (third) solution is less than 30 ppm. The strip dispersion solution samples are left to stand and self-separated into two phases. The aqueous phase samples from the strip dispersion solution samples and the feed solution samples are then analyzed to determine the gallium concentrations by using an atomic absorption spectrophotometer (AAS). The aqueous phase samples from the strip dispersion solution are subsequently subjected to an electrolytic process and the resulted gallium has high purity (>4N) and an estimated recovery rate of about 99.1 **%.**

After the extraction is completed, the feed solution is drained from the tube side of the hollow-fiber SLM module collected into a cementation tank. After being cemented and electrolyzed, the resulted indium has high purity gallium (>4N5) and an estimated recovery rate of about 99.2%.

### Example 2

The experimental procedure in this example is referred to Example 1 except that the hydrochloric acid solution and the hydrogen peroxide solution are mixed with a first volume ratio of 10:2 but not 10:1 in the first solution.

The estimated recovery rates of the copper, indium, gallium, and selenium are about 99.4%, 99.2%, 99.2%, and 99.4%, respectively.

### Example 3

The experimental procedure in this example is referred to Example 1 except that the hydrochloric acid solution and the hydrogen peroxide solution are mixed with a first volume ratio of 10:3 but not 10:1 in the first solution.

The estimated recovery rates of the copper, indium, gallium, and selenium are about 99.5%, 99.3%, 99.2%, and 99.9%, respectively.

### Example 4

The experimental procedure in this example is referred to Example 3 except that the hydrochloric acid concentration of the aqueous strip solution is 2N but not 1 N during separating the gallium from the indium in the feed solution by using the hollow-fiber SLM module.

The estimated recovery rates of the copper, indium, gallium, and selenium are about 99.4%, 99.3%, 99.4%, and 99.9%, respectively.

### Example 5

The experimental procedure in this example is referred to Example 3 except that the hydrochloric acid concentration of the aqueous strip solution is 3N but not 1 N during separating the gallium from the indium in the feed solution by using the hollow-fiber SLM module.

The estimated recovery rates of the copper, indium, gallium, and selenium are about 99.4%, 99.3%, 99.5%, and 99.9%, respectively.

### Example 6

The experimental procedure in this example is referred to Example 5 except that the proton concentration of the third solution is initially adjusted to 9N but not 8N by using the hydrochloric acid during separating the gallium from the indium in the feed solution by using the hollow-fiber SLM module.

The estimated recovery rates of the copper, indium, gallium, and selenium are about 99.4%, 99.3%, 99.5%, and 99.9%, respectively.

### Example 7

The experimental procedure in this example is referred to Example 5 except that the proton concentration of the third solution is initially adjusted to 10N but not 8N by using the hydrochloric acid during separating the gallium from the indium in the feed solution by using the hollow-fiber SLM module.

The estimated recovery rates of the copper, indium, gallium, and selenium are about 99.4%, 99.2%, 99.54%, and 99.9%, respectively.

According to the above examples, the first volume ratio of the hydrochloric acid to the hydrogen peroxide of the first solution, the hydrochloric acid concentration of the aqueous strip solution, or the proton concentration of the third solution can be adjusted slightly to relatively increase the recovery rate of at least one of those noble metals. Moreover, the recovery rates of the copper, indium, gallium, and selenium by using the aforementioned process can reach up to 99% or more (approximately 100%). Furthermore, the embodiments of the present invention are directed to the processes operated in single production line to separate the copper, indium, gallium, and selenium respectively, rather than changing the reaction solution, thereby simplifying the process, shortening the operation time and lowering the manufacture cost.

Although the present invention has been described in considerable detail with reference to certain embodiments thereof, their spirit and scope of the appended claims should not be limited to the description of the embodiments contained herein. Those skilled in the art should appreciate that they may readily use the present disclosure as a basis for designing or modifying other processes and structures for carrying out the same purposes and/or achieving the same advantages of the embodiments introduced herein. In view of the foregoing, it is intended that the present invention cover modifications and variations of this invention provided they fall within the scope of the following claims.

## Claims

1. A method for recovery of copper, indium, gallium, and selenium, comprising:
adding a plurality of metal powders into a hydrochloric acid solution, wherein the metal powders contain copper, indium, gallium, and selenium;
adding a hydrogen peroxide solution into the hydrochloric acid solution for completely dissolving the metal powders and forming a first solution, wherein the hydrochloric acid solution and the hydrogen peroxide solution are mixed with a first volume ratio in the first solution;
adding a hydrazine solution into the first solution for obtaining the selenium and forming a second solution almost free of selenium;
performing a cementation step to place an indium metal into the second solution for obtaining the copper and forming a third solution almost free of copper; and
obtaining the gallium by using a supported liquid membrane (SLM) module, wherein the SLM module has a first portion and a second portion, the first portion has a liquid membrane embedded in a microporous support material, and the step of obtaining the gallium comprises :
adjusting a initial proton concentration of the third solution to at least 8N by using a concentrated acid;
feeding the third solution into the second portion of the SLM module in a first direction;
introducing a strip dispersion solution into the first portion of the SLM device in a second direction parallel but opposing to the first direction, so as to diffuse gallium ions of the third solution into the strip dispersion solution in the first portion, wherein the strip dispersion solution includes an aqueous strip solution dispersed in an organic solution, and the organic solution comprises an extractant to extract the gallium ions from the third solution; and
separating all or a part of the strip dispersion solution into an organic phase and an aqueous phase, wherein the aqueous phase contains the gallium ions, and the third solution remains the gallium ions with less 30 ppm.

2. The method of claim 1, wherein the initial proton concentration of the third solution is adjusted to 8N to 10N by using the concentrated acid.

3. The method of claim 1, wherein the first volume ratio of the hydrochloric acid to the hydrogen peroxide in the first solution is 10:1 to 10:3.

4. The method of claim 1, wherein the hydrazine solution has an equivalent concentration of 1 N to 3N.

5. The method of claim 1, wherein the indium metal is in a form of metal powder, a metal wire, a metal laminate or a metal plate.

6. The method of claim 1, wherein the organic solution has more volume than the aqueous strip solution in the strip dispersion solution.

7. The method of claim 6, wherein the volume ratio of the organic solution to the aqueous strip solution in the strip dispersion solution is 2:1.

8. The method of claim 1, wherein the extractant is di(2-ethyl-hexyl) phosphoric acid (D2EHPA).

9. The method of claim 8, wherein an amount of the D2EHPA in the organic solution is 10 % by volume to 70 % by volume.

10. The method of claim 9, wherein an amount of the D2EHPA in the organic solution is 30 % by volume to 50 % by volume.

11. The method of claim 1, wherein the aqueous strip solution comprises hydrochloric acid.

12. The method of claim 1, wherein the equivalent concentration of the hydrochloric acid in the aqueous strip solution is 1 N to 3N.

13. The method of claim 1, after the strip dispersion solution is separated into the organic phase and the aqueous phase, further comprising:
electrolyzing the third solution for obtaining the indium.
